# EUROPEAN PATENT APPLICATION

(11) **EP 2 679 383 A1**
(43) Date of publication of application: **01.01.2014**
(21) Application number: 12174167.2
(22) Date of filing: 28.06.2012
(51) Int. Cl.: B31D 3/00, E04C 2/36

(54) **Cellular structure for double curvature panel**

(71) Applicant: Axxion Technology B.V., 8013 NK Zwolle (NL)
(72) Inventor: Wiegersma, Wieger, 6951 MG Dieren (NL)
(74) Representative: Nederlandsch Octrooibureau

(57) **Abstract**

The present invention relates to a cellular core having, in an expanded state, a bonding surface area suitable for sandwich type construction, wherein the cellular core comprises a plurality of elongate planar rectangular wall elements which define the depth and height of said core and extend in a core plane in a wall element direction, and wherein, in the expanded state of the cellular core, arrays of closed cells are formed between two adjacent wall elements, and wherein a respective cell is formed by wall element sections and bonded wall element sections of the two adjacent wall elements. The bonded wall elements have with this folding facility of the wall elements, the freedom to take a position of being almost or exact rectangular to the skin line which means that with this core we have on almost all positions the best skin support as it is the closest to rectangular support. An advantage is that the core can be formed with a double curvature.

## Description

### Background

The present invention relates to a cellular core having, in an expanded state, a bonding surface area suitable for sandwich type construction, wherein the cellular core comprises a plurality of elongate planar rectangular wall elements which define the depth and height of said core and extend in a core plane in a wall element direction, and wherein, in the expanded state of the cellular core, arrays of closed cells are formed between two adjacent wall elements, and wherein a respective cell is formed by wall element sections and bonded wall element sections of the two adjacent wall elements. Such a core is known from FR2690870 which publication relates to a method of making profiles of a composite material comprising a cellular network of paper or similar, which can be folded like an accordion by contacting each other's cell walls, the network being interposed between two cover sheets of paper or similar, arranged perpendicular to the side walls of the network and made integral by gluing the cellular network, said process being **characterized in that**, prior to bonding of the cover sheets against the cellular network, the network is cut to a desired size and then folded into the desired shape and glued to the corresponding faces. The invention of FR2690870 does not suffice in that it does not provide double curved panels, also referred to as 3D honeycomb wherein the panel is deformed out of it panel plane. The cellular network of FR2690870 is folded around one folding axis only, or around parallel folding axes. Forming of a true free double curved shape is not possible. The folding line or lines in FR2690870 extend all parallel with respect to the wall element direction. A different orientation of a folding line, like transverse with respect to the wall element direction is not possible.

In general, the traditional shape of a honeycomb surface is based on a 2D shaping. Traditional products are flat panels or similar products. In the development of lightweight products, the need for 3D honeycomb is emerging though still not yet answered by the industry.

### Summary of the invention

The invention aims to be able to realize a 3D formability in all directions for a core according to the introductory portion of claim 1 while maintaining the size of the cells, which allows an optimal support for the skin materials that are to be applied on to the core, also honeycomb grid, to form a panel.

In known applications the honeycomb structure is able to support a 2D grid with maintaining the size of the support. Then a 3D applications is not possible because due to the coupling between the wall element section and the bonded wall element section, the known honeycomb will tear upon double curved bending.

Another object of the invention is to improve the glue bond to allow a better handling in the production of the panel parts in which the honeycomb is applied.

Yet another object of the invention is to provide a continuum in form to be able to absorb shear stresses to a level which are around as high as with standard 2D honeycomb with twice the weight.

Yet another object of the invention core is to provide a cellular core, wherein a problem is at least partly solved.

Yet another object of the invention is to provide an alternative cellular core. According to a first aspect of the invention this is realized with a cellular core having, in an expanded state, a bonding surface area suitable for sandwich type construction, wherein the cellular core comprises a plurality of elongate planar rectangular wall elements which define the depth and height of said core and extend in a core plane in a wall element direction, and wherein, in the expanded state of the cellular core, arrays of closed cells are formed between two adjacent wall elements, and wherein a respective cell is formed by wall element sections and bonded wall element sections of the two adjacent wall elements, wherein the wall element section is configured such that said wall element section is pliable for enabling bonded wall element sections of the expanded core to change their mutual position upon bending of the expanded cellular core.

The wall element section being pliable ensures to maintain the bonding surface area, also referred to as the support grid, formed for the skin material. When the core is curved, the wall element sections ply which enables to curve the core along a folding line which extends transverse with respect to the wall element direction. In contrast, in known cores, folding along a line transverse with respect to the wall element direction is not possible or if forced causes wall element sections to buckle and/or sharply fold which causes a gap left open relative to the desired support grid. The wall element section being pliable enables bonded wall element sections of the expanded core to change their mutual position upon bending of the expanded cellular core. The bonded wall element sections being able to change their mutual position helps even more to facilitate the core to take a double curved position because the bonded sections are relatively free to orient themselves with respect to the curvature. This also aids in maintaining the desired support grid. In contrast, in known cores, the bonded wall element sections extend in line, parallel with respect to the wall element direction. The expression "the wall element section being pliable" has to be interpreted such that the wall element section plies under compressive load. The ply formed in the wall element section is a continuous curve. The deformation is in the elastic domain. Plying is distinct from wrinkle formation which is characterized by deformation in the plastic domain and sharp folding seams being formed in the wall element section.

According to a further aspect of the invention the ratio of the tensile strength of a wall element section and the buckling resistance of said wall element section is such that said wall element section is pliable for enabling bonded wall element sections of the expanded core to change their mutual position upon bending of the expanded cellular core. The tensile strength of a wall element section needs to be such that material transport within the core upon bending of the expanded core is possible.

According to a further aspect of the invention, the ratio of the bending strength of a wall element section and the tensile strength of a bonded wall element section is such that in the expanded state the core is deformable in the wall element direction and in a direction transverse to the wall element direction.

According to a further aspect of the invention, the ratio of the tensile strength of a wall element section and the tensile strength of a bonded wall element section is such that in the expanded state the core is deformable in the wall element direction and in a direction transverse to the wall element direction. The tensile strength of the wall element sections facilitates material transport within the core such that deformation in the wall element direction and in a direction transverse to the wall element direction is possible. Upon deformation, the bonded wall element section is free and may choose another angular position relative to a z-axis which is transverse to the core plane. Note : "deformable" is related to folding within elastic conditions, following the Euler equation always below the level were the deformation turns irreversible.

In an embodiment of the cellular core, the core is substantially equally deformable in the wall element direction and in a direction transverse to the wall element direction.

Relative to the centre of the core, deformation is possible towards all the 4 quadrants or any combination thereof, the quadrants being determined by the wall element direction and the direction transverse to the wall element direction of deformation. In contrast, in a prior art core, relative to the centre of the core, deformation is only possible in the direction transverse to the wall element direction.

According to a further aspect of the invention, the ratio of the tensile strength of a wall element section and the buckling or folding resistance of said wall element section is such that double curved bending of the cellular core in expanded state is facilitated within the elastic deformation area. Bending means that the core deforms out of its core plane in the z-direction.

In an embodiment of the cellular core according to the invention, the tensile strength and the bonding strength of said bonded wall element section is mainly determined by a bonding means.

In an embodiment of the cellular core, the bonding means comprises an adhesive based on a component or a mixture of components selected from the group, PVA, PVAc, Starch, PUR, hotmelt, hotmelt PUR, UF, resin based and sugar glue types.

In an embodiment of the cellular core, the bonding means provides a bonding cohesion which is higher than the tear or tensile strength of the wall element section. This even more enables material transport within the core upon bending of the expanded core.

In an embodiment of the cellular core, the ratio of the tensile strength of a wall element section and the tensile strength of a bonded wall element section is at least 2. Alternatively or additionally, the ratio is at least such that the wall element is section is bending without influencing the bonded wall element section.

In an embodiment of the cellular core, the ratio of the tensile strength (as expressed in N) of a wall element section and the buckling resistance (as expressed in N) of said wall element section is higher than 1. Alternatively or additionally the ratio is such that a pulling strength (N) of the wall element section on the pulled side, is substantially higher than the buckling resistance (N) of the wall element section on the compressed side, so that the buckling will always take place in all deformation scenario's on the compressed side of the wall element section within the elastic deformation conditions.

The present invention further relates to a panel comprising a cellular core according to any of the preceding claims as well as cover sheets on opposite sides of the cellular core, said cellular core comprising a plurality of elongate planar rectangular wall elements consisting of fibrous material, such as cardboard, which extend in a wall element direction and which are arranged in series next to each other, said wall elements each having alternating bonded wall element sections and free wall element sections, said wall elements being in a state expanded transversely with respect to the wall element direction and defining arrays of cells between two adjacent wall elements, wherein each cell is formed by free wall element sections and bonded wall element sections of adjacent wall elements, and the longitudinal edges of said expanded wall elements defining opposite bonding surface areas bonded to the respective cover sheet. The panel is **characterized in that** the bonding surfaces and the corresponding cover sheets have a double curvature and in that the wall elements (3) have a maximum specific mass of 120 g/m² preferably of 110 g/m², most preferably of 80 g/m².

Preferably, in the panel the wall elements have a minimum specific mass of 40 g/m², preferably 50 g/m², most preferably 70 g/m².

In an embodiment of the panel, the ratio of a height of the panel the ratio of the radius (r) of curvature of the panel and the panel height (h) exceeds about 1.

In an embodiment of the panel, the ratio of a cell diameter and a radius of curvature of the panel of a radius of curvature of the panel and a cell diameter exceeds about 1. In connection with cellular cores, the size of a cell is the inscribed circle. The invention is particularly useful for cores having relatively small cells like smaller than 14 mm.

The various aspects discussed in this patent can be combined in order to provide additional advantages.

### Description of the drawings

The invention will be further elucidated referring to an preferred embodiment of a cellular core shown in the drawing wherein shown in:
Fig. 1 top view of cellular core according to the invention in its expanded state;
fig. 2 the core according to fig. 1 elongated in y -direction;
fig. 3 the core according to fig. 1 elongated in x -direction;
fig. 4 the core of fig. 1 in top view in a double curved state;
fig. 5 the core of fig. 1 in bottom view in a double curved state;
fig. 6a detail of the core according to fig. 1;
fig. 6b the detail of fig. 5a when the core is curved; and
fig. 7 a wall element section.

### Detailed description of embodiments

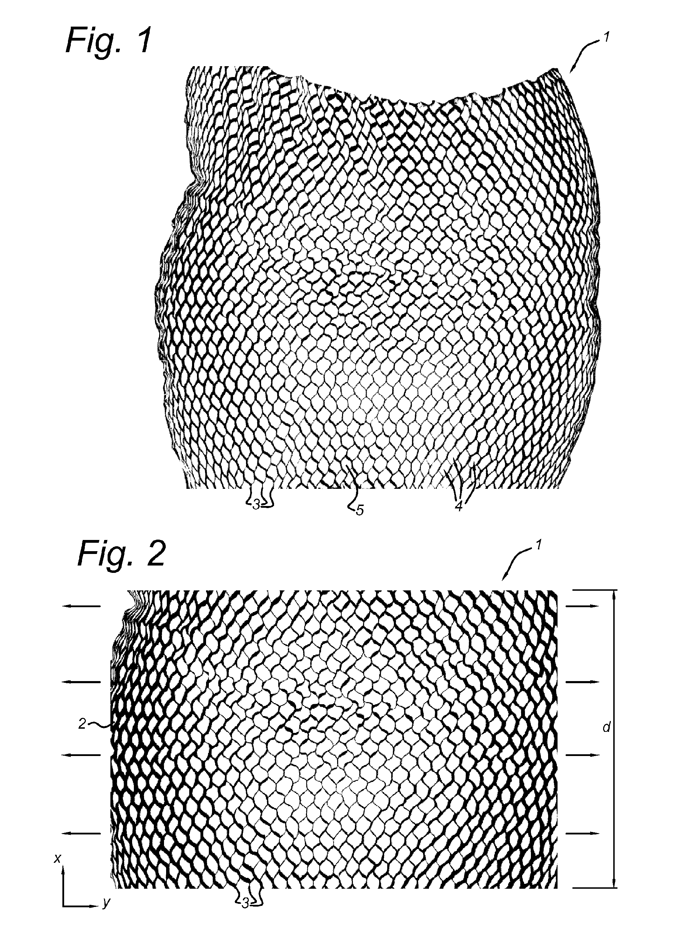

The invention will be described referring to all figures 1-7 wherein an embodiment of a cellular core is shown or details thereof.

The figures show a cellular core 1. The cellular core 1 comprises a plurality of elongate planar rectangular wall elements 3. These wall elements 3 define the depth d and height h of said core 1. These wall elements 3 extend in the core plane in a wall element direction x. It is well known in the field that the wall elements 3 are glued together at bonded wall element sections 7 wherein bonded wall element sections 7 of adjacent pairs of wall elements are offset to enable expansion of the core 1 to an expanded state shown in fig 1. During initial expansion of the core 1 after the bonding process, the core expands in direction transverse to the wall element direction. When the description refers to a core 1, it is the core in an expanded state. Between adjacent wall elements 3, arrays 4 of open cells 5 are formed. In the expanded state of the cellular core 1, arrays of open cells 4 are formed between two adjacent wall elements 3, and a respective cells 5 is formed by free wall element sections 6 and bonded wall element sections 7 of the two adjacent wall elements 3. In such an array 4, bonded wall element sections 7 and free wall sections 6 alternate. Adjacent arrays 4 are offset. Two basic elements can be distinguished that form a cell 5, being a free wall element section 6 and bonded wall element section 7.

The core 1 constitutes a bonding surface area 2 suitable for sandwich type construction with so called skin material (not shown) which sandwich type construction is well known in the field.

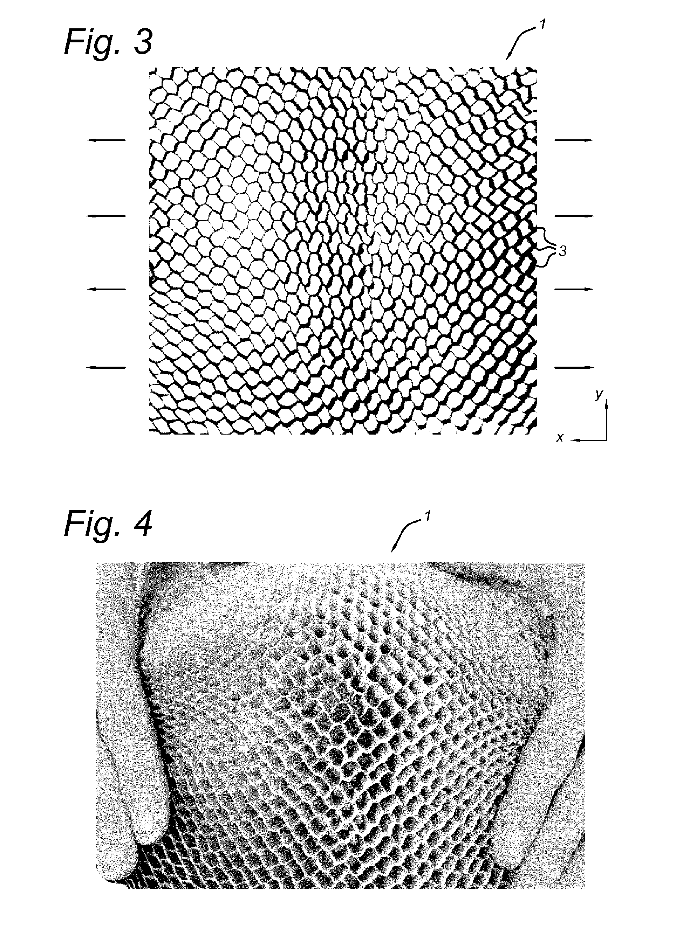

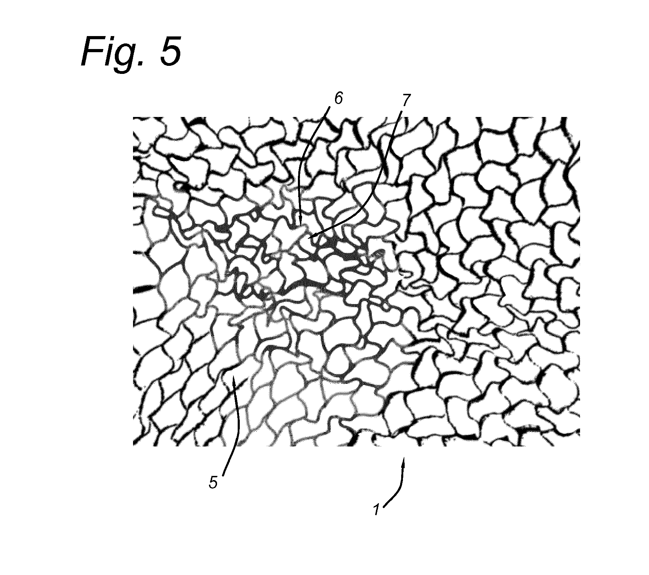

The free wall element section 6 is configured such that said free wall element section 6 is pliable for enabling bonded wall element sections 7 of the expanded core 1 to change upon bending of the expanded cellular core 1. Upon double curved bending of the core 1, as shown in fig. 4 and 5, the bonded wall element sections 7 change their mutual position, that is rotate around their longitudinal axis which is transverse with respect to the core plane. This is shown in fig. 5 wherein it is clear that bonded wall element sections 7 are oriented quite randomly. This is in contrast with known cores wherein bonded wall element sections 7 cannot (mutually) rotate around their longitudinal axis. In addition, the bonded wall element sections 7 have freedom to orient towards the bonding surface area which is all the more beneficial in terms of allowable compression load for a curved panel (not shown) comprising the core 1. Thus, upon bending of the core 1, the bonded wall element sections 7 themselves hardly deform however may choose another inclination compared to the x direction.

With this invention therefore a substantial step forward has been made in 3D shaping while maintaining the support grids for the skin materials (not shown).

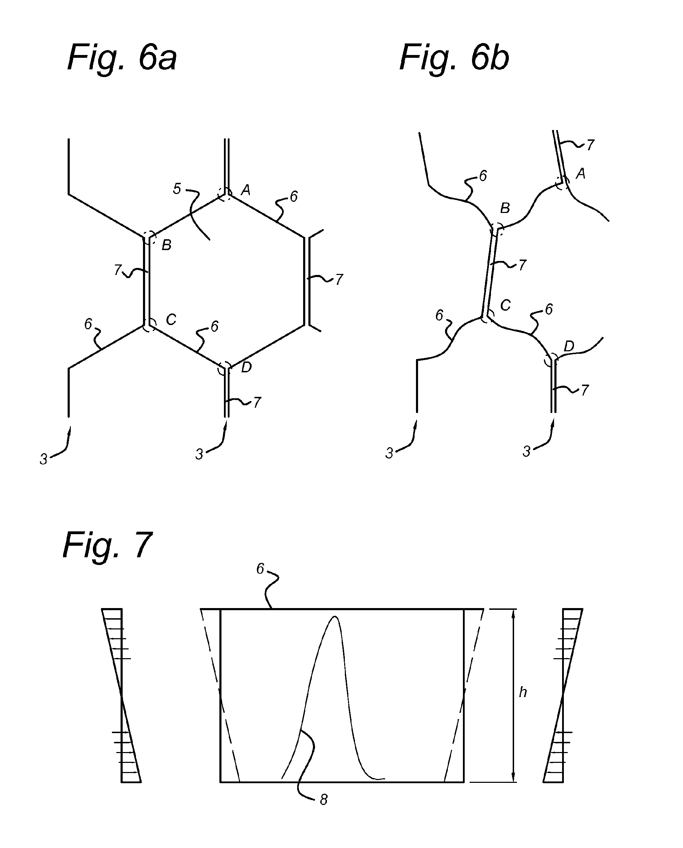

The free wall element section 6 is configured such that the ratio of the tensile strength of a free wall element section 6 and the buckling resistance of said free wall element section 6 is such that said wall element section is pliable for enabling bonded wall element sections 6 of the expanded core 1 to change their mutual position upon bending of the expanded cellular core 1. The free wall element section 6 being pliable has to be interpreted such that the free wall element section 6 plies under compressive load which is shown in fig. 7. The ply 8 formed in the free wall element section 6 is a continuous curve. The deformation is in the elastic domain. The ply 8 is formed at the inside curve of the core 1 as shown in fig. 5. The elastic elongation takes place at the outside curve of the core 1 as shown in fig. 4. The continuous curved wall element sections 6 are shown in fig. 5 and ensure a continuous and even support of skin material (not shown).

Fig. 6a shows a detail of a core 1 before deformation and fig. 6b shows the detail of the double curved core 1 after deformation.

In addition or alternatively, the ratio of the tensile strength of a free wall element section 6 and the tensile strength of two bonded wall element sections 7 is such that in the expanded state the core 1 is deformable in the wall element direction and in a direction transverse to the wall element direction x.

Characteristically, the core 1 is substantially equally deformable in the wall element direction x and in a direction transverse to the wall element direction. Using a quadrant for positioning in the centre of the core 1, the possible deformation direction in which the core is deformable, is in both the z-directions, that is transverse with respect to the core plane, and in all the 4 quadrants in any combination of deformation. In contrast, a known core is only deformable in a direction transverse to the wall element direction x and bendable along bending line parallel with respect to the wall element direction x. The ratio of the tensile strength of a free wall element section 6 and the buckling resistance of said free wall element section 6 is such that double curved bending of the cellular core in the z-direction in any or several quadrants of the positioning grid in expanded state is facilitated.

The tensile strength and the bending strength of each two bonded wall element section 7 is mainly determined by a bonding means which adheres two bonded wall element sections 7 to each other. The bonding means (not shown) is an adhesive based on a component selected from the group, PVA, PVAc, Starch, PUR, hotmelt, hotmelt PUR, UF or sugar glue types, or a mix of any of these components. The adhesive realizes a bonding cohesion between the two bonded wall element sections 7 which bonding cohesion is higher than the tear or tensile strength of the free wall element section 6, usually paper, itself. The ratio of the tensile strength of a free wall element section 6 and the tensile strength of two bonded wall element sections 7 is between 1 to 2 or is such that the free wall element section 6 is buckling without influencing the bonded wall element section 7.

The ratio of the tensile strength of a free wall element section 6 and the buckling resistance of said free wall element section 6 is between 1 to 2 or such that the pulling strength of the, here paper, of the free wall element section 6 on the pulled side, is substantially higher than the buckling force of the free wall element section 6 on the compressed side, so that the buckling will always take place in all deformation scenario's of the core 1 on the compressed side of the free wall element section 6.

In use, the core 1 is bending in its desired double curved shape. Then the skin material is bonded with the bonding are and cured to form a double curved panel.

This provides the possibility of maintaining the integrity of the bond between two wall element sections 6 of a bonded wall element section 7 and at the same time the possibility to absorb any deformation by buckling of the wall element section to stay in the elastic deformation of the paper. The bonded wall element sections 7 will stay straight, not buckled, but may choose other positions compared to the initial position of the bonded wall element sections 7 in a flat lay out or the core 1 in the core plane. The bonded wall element sections 7 may be turned to any degree compared to the original direction of the in order to maintain the integrity of the support grid. In practice the bonded wall element sections 7 will start to buckle when the deformation has reached the end of the elastic performance and enters the plastic deformation now tearing the grid.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Cellular core (1) comprising a plurality of elongate planar rectangular wall elements (3) which define the depth (d) and height (h) of said core and extend in a core plane in a wall element direction (x), said wall elements (3) each having alternating bonded wall element sections (7) and free wall element sections (6), in such a way that the wall elements (3), in a state expanded transversely with respect to the wall element direction (x), define arrays of cells (4) between two adjacent wall elements (3), wherein each cell (5) is formed by free wall element sections (6) and bonded wall element sections (7) of adjacent wall elements (3), and the longitudinal edges of said expanded wall elements (3) define opposite bonding surface areas (2) suitable for sandwich type construction, wherein the free wall element sections (6) are pliable for enabling bonded wall element sections of the expanded core to change their mutual position upon bending of the expanded cellular core.

2. Cellular core (1) according to claim 1, wherein the ratio of the tensile strength of a wall element section and the buckling resistance of said wall element section is such that said wall element section is pliable for enabling bonded wall element sections of the expanded core to change their mutual position upon bending of the expanded cellular core.

3. Cellular core (1) according to claim 1 or 2 wherein the ratio of the tensile strength of a wall element section and the tensile strength of a bonded wall element section is such that in the expanded state the core is deformable in the wall element direction and in a direction transverse to the wall element direction.

4. Cellular core according to a preceding claim, wherein the core is substantially equally deformable in the wall element direction and in a direction transverse to the wall element direction.

5. Cellular core according to a preceding claim, wherein the ratio of the tensile strength of a wall element section and the buckling resistance of said wall element section is such that double curved bending of the cellular core in expanded state is facilitated.

6. Cellular core according to a preceding claim, wherein the tensile strength and the bending strength of said bonded wall element section is mainly determined by a bonding means.

7. Cellular core according to claim 6, wherein the bonding means comprises an adhesive based on a component or a mixture of components selected from the group, PVA, PVAc, Starch, PUR, hotmelt, hotmelt PUR, UF, resin based and sugar glue types.

8. Cellular core according to a preceding claim 6 or 7, wherein the bonding means provides a bonding cohesion which is higher than the tear- or tensile strength of the wall element section.

9. Cellular core according to claim a preceding claim 6-8, wherein the ratio of the tensile strength of a wall element section and the tensile strength of a bonded wall element section is larger than 1, preferably between 1 to 2.

10. Cellular core according to claim, wherein the ratio of the tensile strength of a wall element section and the buckling resistance of said wall element section is larger than 1, preferably between 1 to 2.

11. Cellular core according to any of the preceding claims, wherein the wall elements (3) consist of fibrous material, such as cardboard, having a maximum specific mass of 120 g/m², preferably of 110 g/m², most preferably of 80 g/m².

12. Cellular core according to any of the preceding claims, wherein the wall elements (3) consist of fibrous material, such as cardboard, having a minimum specific mass of 40 g/m², preferably 50 g/m², most preferably 70 g/m².

13. Cellular core according to any of the preceding claims, wherein the wall elements (3) consist of fibrous material, such as cardboard, having a specific mass in the range of 40-120 g/m², preferably 50-110 g/m², most preferably 70-80 g/m².

14. Panel comprising a cellular core according to any of the preceding claims as well as cover sheets on opposite sides of the cellular core, said cellular core comprising a plurality of elongate planar rectangular wall elements (3) consisting of fibrous material, such as cardboard, which extend in a wall element direction and which are arranged in series next to each other, said wall elements (3) each having alternating bonded wall element sections (7) and free wall element sections (6), said wall elements (3) being in a state expanded transversely with respect to the wall element direction and defining arrays of cells (4) between two adjacent wall elements (3), wherein each cell (5) is formed by free wall element sections (6) and bonded wall element sections (7) of adjacent wall elements (3), and the longitudinal edges of said expanded wall elements (3) defining opposite bonding surface areas (2) bonded to the respective cover sheet, **characterized in that** the bonding surfaces and the corresponding cover sheets have a double curvature and **in that** the wall elements (3) have a maximum specific mass of 120 g/m² preferably of 110 g/m², most preferably of 80 g/m².

15. Panel according to claim 14, wherein the wall elements (3) have a minimum specific mass of 40 g/m², preferably 50 g/m², most preferably 70 g/m².
